# EUROPEAN PATENT APPLICATION

(11) **EP 3 950 620 A1**
(43) Date of publication of application: **09.02.2022**
(21) Application number: 20783498.7
(22) Date of filing: 18.03.2020
(51) Int. Cl.: C03C 3/12, A44C 27/00, C03C 3/068, C03C 3/14, C03C 3/145, C03C 3/15, C03C 3/155

(54) **DECORATIVE GLASS ARTICLE**

(30) Priority: 05.04.2019 JP 2019072600; 28.02.2020 JP 2020033380
(71) Applicant: Nippon Electric Glass Co., Ltd., Otsu-shi, Shiga 520-8639 (JP)
(72) Inventor: FUJITA, Naoki, Otsu-shi Shiga 520-8639 (JP); NISHIDA, Shinsaku, Otsu-shi Shiga 520-8639 (JP); ENOMOTO, Tomoko, Otsu-shi Shiga 520-8639 (JP)
(74) Representative: Henkel & Partner mbB
(86) International application number: PCT/JP2020/012040
(87) International publication number: WO 2020/203309

(57) **Abstract**

Abstract: The present invention provides a decorative glass article having excellent brilliance and fire. This decorative glass article is characterized by being substantially free of lead oxide and by having a refractive index of 1.9 or more and an Abbe number of 42 or less.

## Description

### TECHNICAL FIELD

The present invention relates to a decorative glass article suitable for decorative purposes, such as a ring, a pendant, an earring, or a bracelet.

### BACKGROUND ART

According to GLASS MANUFACTURERS' ASSOCIATION OF JAPAN, a crystal glass is defined as "a glass containing lead oxide as a main component and a glass containing potassium oxide, barium oxide, titanium oxide, etc. as a main component, which is characterized by having high transparency, a refractive index nd of 1.52 or more, a beautiful brilliance and a clear tone". The crystal glass is excellent in brilliance, transparency, reverberation, profound feeling, processability, etc., and is used for decoration (jewelry, works of art, tableware, etc.).

However, since the lead-containing crystal glass is harmful to a human body and has a problem of being easily scratched, a lead-free crystal glass has been developed (Patent Literatures 1 and 2).

### CITATION LIST

### PATENT LITERATURE

Patent Literature 1: Japanese Patent No. 2588468
Patent Literature 2: Japanese Patent No. 4950876

### SUMMARY OF INVENTION

### TECHNICAL PROBLEM

The lead-free crystal glass described in Patent Literature 2 does not have sufficient brilliance as a decoration. Also, an iridescent brilliance called "fire" tends to be weak.

In view of the above, an object of the present invention is to provide a decorative glass article excellent in brilliance and fire.

### SOLUTION TO PROBLEM

A decorative glass article of the present invention is substantially free of lead oxide, and has a refractive index of 1.9 or more and an Abbe number of 40 or less. Since the glass article of the present invention has a high refractive index, the difference in refractive index between the inside and the outside (atmosphere) of the glass article is large, and light is easily reflected inside the glass article. As a result, it is easy to obtain sufficient brilliance as a decorative glass article. In addition, since the glass article of the present invention has a small Abbe number and a high dispersion, fire is likely to be expressed. In the present description, the expression "substantially free of" means not intentionally contained as a glass composition, and does not exclude an inclusion of unavoidable impurities. Objectively, it means that the content is less than 0.1% in mol%.

The decorative glass article of the present invention preferably has a degree of coloring λ₅ of 395 or less. Thus, visible light is easily transmitted, so that the decorative glass article tends to be colorless and transparent. The "degree of coloring λ₅" indicates the shortest wavelength (nm) at which the light transmittance is 5% in the transmittance curve at a thickness of 10 mm.

It is preferable that a content of bismuth oxide is 30% or less in mol% in the decorative glass article of the present invention. When bismuth oxide is contained, the glass article tends to be overcolored and poor in fire. Therefore, by reducing the content of bismuth oxide, it is easy to obtain a glass article excellent in fire.

The decorative glass article of the present invention preferably contains, in mol%, 0% to 63% of La₂O₃, 0% to 40% of B₂O₃, 0% to 50% of Al₂O₃, 0% to 40% of ZrO₂, 0% to 80% of Nb₂O₅, 0 to 60 of Gd₂O₃, 0% to 60% of Ta₂O₅, and 0.1% to 100% of La₂O₃+Nb₂O₅+Ta₂O₅+Gd₂O₃ By defining the glass composition in this way, it is easy to obtain a glass article having a desired optical constant.

The decorative glass article of the present invention preferably further contains, in mol%, 0% to 85% of TiO₂.

The decorative glass article of the present invention is preferably subjected to chamfering. Thus, light is easily reflected inside the glass article, and it is possible to enhance the brilliance.

The decorative glass article of the present invention is suitable as an artificial jewel.

A decoration of the present invention includes the above decorative glass article.

### ADVANTAGEOUS EFFECTS OF INVENTION

According to the present invention, it is possible to provide a decorative glass article excellent in brilliance and fire.

### BRIEF DESCRIPTION OF DRAWINGS

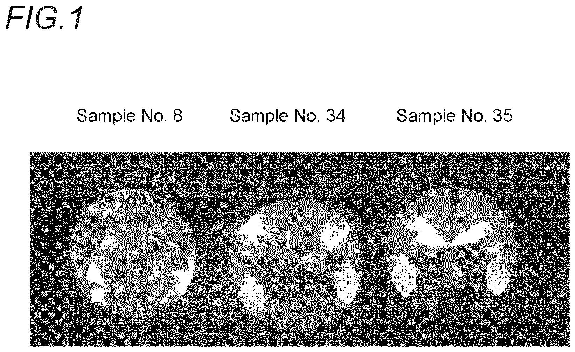

Fig. 1 is a plane photograph showing sample Nos. 8, 34 and 35 in Examples.

### DESCRIPTION OF EMBODIMENTS

A decorative glass article of the present invention has a refractive index (nd) of 1.9 or more, and preferably 2.0 or more, 2.1 or more, 2.2 or more, and particularly preferably 2.25 or more. Thus, the difference in refractive index between the inside and the outside (atmosphere) of the glass article is large, and light is easily reflected inside the glass article. As a result, it is easy to obtain sufficient brilliance as a decorative glass article. The upper limit of the refractive index is not particularly limited. When the upper limit thereof is too large, vitrification becomes unstable, so that the upper limit is preferably 2.6 or less, 2.5 or less, and particularly preferably 2.4 or less.

The decorative glass article of the present invention preferably has an Abbe number (vd) of 42 or less, 40 or less, 35 or less, 30 or less, and particularly preferably 25 or less. Thus, the glass article is highly dispersed, and fire is likely to exhibit. The lower limit of the Abbe number is not particularly limited. When the lower limit thereof is too small, vitrification becomes unstable, so that the lower limit is preferably 10 or more, and particularly preferably 15 or more.

The composition of the decorative glass article of the present invention is not particularly limited as long as it has the above optical properties. For example, the decorative glass article of the present invention contains, in mol%, 0% to 63% of La₂O₃, 0% to 40% of B₂O₃, 0% to 50% of Al₂O₃, 0% to 40% of ZrO₂, 0% to 80% of Nb₂O₅, 0 to 60 of Gd₂O₃, 0% to 60% of Ta₂O₅, and 0.1% to 100% of La₂O₃+Nb₂O₅+Ta₂O₅+Gd₂O₃. The reason for limiting the glass composition in this way will be described below. In the following description of the content of each component, "%" means "mol%" unless otherwise specified.

La₂O₃ is a component that forms a network of a glass and is a component that increases the refractive index without lowering the transmittance. In addition, La₂O₃ also has an effect of improving weather resistance. The content of La₂O₃ is preferably 0% to 63%, 0% to 60%, and particularly preferably 1% to 55%. When the content of La₂O₃ is too small, it is difficult to obtain the above effects. On the other hand, when the content of La₂O₃ is too large, vitrification is difficult.

Nb₂O₅ is a component that has a large effect of increasing the refractive index, and is a component that reduces the Abbe number to increase the dispersion. Nb₂O₅ also has the effect of expanding the vitrification range. The content of Nb₂O₅ is preferably 0% to 80%, 1% to 78%, 5% to 75%, 10% to 73%, and particularly preferably 20% to 70%. When the content of Nb₂O₅ is too large, vitrification is difficult.

Gd₂O₃ is a component that increases the refractive index. In addition, Gd₂O₃ also has an effect of improving weather resistance. However, when the content of Gd₂O₃ is too large, vitrification is difficult. Therefore, the content of Gd₂O₃ is preferably 0% to 60%, 0.1% to 60%, 1% to 50%, 2% to 45%, and particularly preferably 3% to 40%.

Ta₂O₅ is a component that has a great effect of increasing the refractive index. However, when the content of Ta₂O₅ is too large, vitrification is difficult, and the cost of raw materials tends to be high. Therefore, the content of Ta₂O₅ is preferably 0% to 60%, 0.1% to 60%, 1% to 50%, 2% to 45%, and particularly preferably 3% to 40%.

B₂O₃ is a component that forms a network of a glass and expands the vitrification range. However, when the content of B₂O₃ is too large, the refractive index decreases, making it difficult to obtain desired optical properties. Therefore, the content of B₂O₃ is preferably 0% to 40%, 0.1% to 40%, 1% to 30%, 2% to 25%, and particularly preferably 3% to 20%.

Al₂O₃ is a component that forms a network of a glass and expands the vitrification range. However, when the content of Al₂O₃ is too large, the refractive index decreases, making it difficult to obtain desired optical properties. Therefore, the content of Al₂O₃ is preferably 0% to 50%, 0.1% to 40%, 1% to 30%, 2% to 25%, and particularly preferably 3% to 20%.

ZrO₂ is a component that increases the refractive index. In addition, since ZrO₂, as an intermediate oxide, forms a network of a glass, ZrO₂ has an effect of expanding the vitrification range. However, when the content of ZrO₂ is too large, vitrification is difficult and the melting temperature becomes too high. Therefore, the content of ZrO₂ is preferably 0% to 40%, 0.1% to 40%, 1% to 30%, 2% to 25%, and particularly preferably 3% to 20%.

The content of La₂O₃+Nb₂O₅+Ta₂O₅+Gd₂O₃ is preferably 0.1% to 100%, more preferably 10% to 95%, and particularly preferably 20% to 90%. When La₂O₃+Nb₂O₅+Ta₂O₅+Gd₂O₃ is too small, it is difficult to obtain the desired refractive index and Abbe number.

The decorative glass article of the present invention may contain the following components in addition to the above components.

TiO₂ is a component that has a large effect of increasing the refractive index, and also has an effect of increasing chemical durability. In addition, TiO₂ also has an effect of reducing the Abbe number and increasing the dispersion. The content of TiO₂ is preferably 0% to 85%, 0.1% to 83%, 5% to 80%, 10% to 80%, 30% to 77%, and particularly preferably 50% to 75%. When the content of TiO₂ is too large, the absorption end shifts to the long wavelength side, so that the transmittance of visible light (particularly visible light in the short wavelength region) tends to decrease, and also vitrification is difficult.

The glass used in the decorative glass article of the present invention may contain a coloring component such as a transition metal oxide or a rare earth oxide other than those described above in order to impart a desired color tone. Specifically, examples of the transition metal oxide include Cr₂O₃, Mn₂O₃, Fe₂O₃, CoO, NiO, CuO, V₂O₅, MoO₃, and RuO₂. Examples of the rare earth oxide include CeO₂, Nd₂O₃, Eu₂O₃, Tb₂O₃, Dy₂O₃, and Er₂O₃. These transition metal oxides or rare earth oxides may be used alone or in combination of two or more thereof. The content of these transition metal oxides or rare earth oxides (the total amount when two or more types are contained) is preferably 0% to 5%, 0.001% to 3%, 0.01% to 2%, and particularly preferably 0.02% to 1%. Depending on the components contained, the coloring may become too strong, the visible light transmittance may decrease, and the desired brilliance or fire may not be obtained. In this case, the content of the above transition metal oxide or rare earth oxide may be less than 1%, 0.5% or less, and 0.1% or less.

The glass used in the decorative glass article of the present invention may contain, in addition to the above components, SiO₂, ZnO, MgO, CaO, SrO, and BaO each in a range of 10% or less in order to expand the vitrification range.

When bismuth oxide (Bi₂O₃) is contained, the glass article tends to be overcolored and poor in fire. Therefore, the content of bismuth oxide in the decorative glass article of the present invention is preferably 30% or less, 20% or less, 10% or less, particularly preferably 1% or less in mol%, and most preferably bismuth oxide is substantially not contained.

The decorative glass article of the present invention is substantially free of lead oxide, which is harmful to the human body.

When the decorative glass article of the present invention positively contains components that expend the vitrification range, such as La₂O₃, Nb₂O₅, and B₂O₃, it is easy to prevent unreasonable crystallization during glass production and to increase the size of the glass article (for example, for diameter, 2 mm or more, 3 mm or more, 4 mm or more, and particularly 5 mm or more).

The glass used in the decorative glass article of the present invention preferably has a degree of coloring λ₅ of 395 or less, 390 or less, 380 or less, and particularly preferably 370 or less. Thus, visible light is easily transmitted, so that a colorless and transparent glass is easily obtained. In addition, the brilliance and the fire are easily increased.

The higher the density of the glass used for the decorative glass article of the present invention, the more profound the appearance and the higher the luxury of the decorative glass article (particularly the jewelry glass article), which is thus preferred. The density of the glass is preferably, for example, 3 g/cm³ or more, 4 g/cm³ or more, and particularly preferably 5 g/cm³ or more.

The decorative glass article of the present invention can be used for decorative purposes such as jewelry, works of art, and tableware. For example, the decorative glass article of the present invention can be attached to decorations (jewelry) such as a ring, a pendant, an earring, or a bracelet as artificial jewels. The shape of the decorative glass article is not particularly limited, and examples thereof include a spherical shape, an elliptical shape, and a polyhedron.

The decorative glass article of the present invention is preferably subjected to chamfering such as so-called brilliant processing. Thus, light is easily reflected inside the glass article, and it is possible to enhance the brilliance, so that the decorative glass article of the present invention is particularly suitable as an artificial jewel.

### Examples

Hereinafter, the decorative glass article of the present invention will be described in detail with reference to Examples, but the present invention is not limited to the following Examples.

Tables 1 to 4 show Examples (Nos. 1 to 33) and Comparative Examples (Nos. 34 and 35) of the present invention.

**[Table 1]**

| Mol% | No.1 | No.2 | No.3 | No.4 | No.5 | No.6 | No.7 | No.8 | No.9 |
|---|---|---|---|---|---|---|---|---|---|
| SiO₂ | | | | | | | | | |
| B₂O₃ | 10 | 5 | | | | | | | |
| Bi₂O₃ | | | | | | | | | |
| Al₂O₃ | | | | | | | | | |
| Na₂O | | | | | | | | | |
| K₂O | | | | | | | | | |
| CaO | | | | | | | | | |
| ZnO | | | | | | | | | |
| TiO₂ | 66 | 71 | 82 | 70 | 64 | 72 | 79 | 75 | 76 |
| ZrO₂ | 10 | 10 | | | 20 | 18 | 5 | 12 | 5 |
| La₂O₃ | 14 | 14 | 18 | 20 | 16 | 10 | 16 | 8 | 14 |
| Nb₂O₅ | | | | | | | | | |
| Gd₂O₃ | | | | | | | | 5 | 5 |
| Ta₂O₅ | | | | 10 | | | | | |
| Sb₂O₃ | | | | | | | | | |
| La₂O₃+Nb₂O₅+ Gd₂O₃+Ta₂O₅ | 14 | 14 | 18 | 30 | 16 | 10 | 16 | 13 | 19 |
| Refractive index nd | 2.26 | 2.28 | 2.31 | 2.28 | 2.29 | 2.33 | 2.32 | 2.33 | 2.30 |
| Abbe number vd | 20 | 20 | 17.3 | 19.5 | 19.1 | 17.3 | 17.3 | 17.1 | 17.1 |
| Degree of coloring λ₅ | 388 | 390 | 395 | 389 | 387 | 390 | 390 | 391 | 391 |
| Brilliance | A | A | A | A | A | A | A | A | A |
| Fire | A | A | A | A | A | A | A | A | A |
| Color tone | Colorless | Colorless | Colorless | Colorless | Colorless | Colorless | Colorless | Colorless | Colorless |

**[Table 2]**

| Mol% | No. 10 | No. 11 | No.12 | No.13 | No.14 | No. 15 | No.16 | No. 17 | No.18 |
|---|---|---|---|---|---|---|---|---|---|
| SiO₂ | | | | | | | 10 | 40 | |
| B₂O₃ | | | | | | | | | |
| Bi₂O₃ | | | | | | | | | |
| Al₂O₃ | | | | | | | | | |
| Na₂O | | | | | | | | | |
| K₂O | | | | | | | | | |
| CaO | | | | | | | | | |
| ZnO | | | | | | | | | |
| TiO₂ | 78 | 79 | 75 | 75 | 42 | 10 | | | 20 |
| ZrO₂ | 8 | 7 | 10 | 9 | | | | | |
| La₂O₃ | 12 | 10 | 10 | 10 | 18 | 30 | 40 | 40 | 20 |
| Nb₂O₅ | | | 1 | 2 | 40 | 60 | 50 | 20 | 60 |
| Gd₂O₃ | 2 | 4 | 4 | 4 | | | | | |
| Ta₂O₅ | | | | | | | | | |
| Sb₂O₃ | | | | | | | | | |
| La₂O₃+Nb₂O₅+Gd₂O₃+Ta₂O₅ | 14 | 14 | 15 | 16 | 58 | 90 | 90 | 60 | 80 |
| Refractive index nd | 2.33 | 2.33 | 2.32 | 2.33 | 2.30 | 2.25 | 2.22 | 2.00 | 2.30 |
| Abbe number vd | 17.0 | 17.5 | 17.2 | 17.1 | 18.1 | 20.4 | 27.4 | 36.2 | 18.1 |
| Degree of coloring λ₅ | 392 | 392 | 390 | 390 | 372 | 372 | 363 | 355 | 385 |
| Brilliance | A | A | A | A | A | A | A | B | A |
| Fire | A | A | A | A | A | A | A | B | A |
| Color tone | Colorless | Colorless | Colorless | Colorless | Colorless | Colorless | Colorless | Colorless | Colorless |

**[Table 3]**

| Mol% | No.19 | No.20 | No.21 | No.22 | No.23 | No.24 | No.25 | No.26 | No.27 |
|---|---|---|---|---|---|---|---|---|---|
| SiO₂ | | | | | 30 | 10 | | | |
| B₂O₃ | | | | | | | | | |
| Bi₂O₃ | | | | | | | | | |
| Al₂O₃ | | | | | | | 10 | 10 | 5 |
| Na₂O | | | | | | | | | |
| K₂O | | | | | | | | | |
| CaO | | | | | | | | | |
| ZnO | | | | | | | | | |
| TiO₂ | 55 | | | | | | | 5 | 40 |
| ZrO₂ | | | | | | | | | |
| La₂O₃ | 25 | 40 | 40 | 24 | 30 | 60 | 30 | 30 | 30 |
| Nb₂O₅ | 20 | 45 | 15 | 72 | | | 60 | 55 | 25 |
| Gd₂O₃ | | | | | | | | | |
| Ta₂O₅ | | 15 | 45 | 4 | 40 | 30 | | | |
| Sb₂O₃ | | | | | | | | | |
| La₂O₃+Nb₂O₅+ Gd₂O₃+Ta₂O₅ | 45 | 100 | 100 | 100 | 70 | 90 | 90 | 85 | 55 |
| Refractive index nd | 2.27 | 2.23 | 2.20 | 2.27 | 2.06 | 2.09 | 2.20 | 2.19 | 2.21 |
| Abbe number vd | 19.2 | 27.5 | 32.4 | 22.4 | 33.3 | 40.0 | 22.1 | 22.2 | 21.5 |
| Degree of coloring λ₅ | 379 | 366 | 364 | 369 | 280 | 315 | 363 | 366 | 369 |
| Brilliance | A | A | A | A | A | B | A | A | A |
| Fire | A | A | A | A | A | B | A | A | A |
| Color tone | Colorless | Colorless | Colorless | Colorless | Colorless | Colorless | Colorless | Colorless | Colorless |

**[Table 4]**

| Mol% | No.28 | No.29 | No.30 | No.31 | No.32 | No.33 | No.34 | No.35 |
|---|---|---|---|---|---|---|---|---|
| SiO₂ | | | | | | | 61.6 | 69.4 |
| B₂O₃ | | | 37 | | | 39.5 | 3 | 10.2 |
| Bi₂O₃ | | | | | | | | |
| Al₂O₃ | 5 | 10 | | 25 | 50 | 0.5 | 2 | |
| Na₂O | | | | | | | 15 | 8.9 |
| K₂O | | | | | | | 1.5 | 8.5 |
| CaO | | | | | | | 4.5 | 2.8 |
| ZnO | | | | | | | 9 | |
| TiO₂ | 40 | 20 | | | | | 1.7 | |
| ZrO₂ | | | | | | 8 | 1.6 | |
| La₂O₃ | 30 | 30 | 63 | 55 | 30 | 24.1 | | |
| Nb₂O₅ | 25 | 40 | | | | 0.1 | | |
| Gd₂O₃ | | | | | | 15.2 | | |
| Ta₂O₅ | | | | 20 | 20 | 12.6 | | |
| Sb₂O₃ | | | | | | | 0.1 | 0.2 |
| La₂O₃+Nb₂O₅+ Gd₂O₃+Ta₂O₅ | 55 | 70 | 63 | 75 | 50 | 52 | 0 | 0 |
| Refractive index nd | 2.21 | 2.19 | 1.90 | 2.00 | 1.91 | 1.94 | 1.56 | 1.52 |
| Abbe number vd | 21.5 | 22.3 | 41.4 | 34.1 | 36.9 | 39.2 | 45 | 64 |
| Degree of coloring λ₅ | 369 | 366 | 272 | 360 | 360 | 350 | 340 | 290 |
| Brilliance | A | A | B | B | B | B | D | D |
| Fire | A | A | B | B | B | B | C | D |
| Color tone | Colorless | Colorless | Colorless | Colorless | Colorless | Colorless | Colorless | Colorless |

First, raw materials were mixed so as to have each glass composition shown in the tables to prepare a raw material batch. The obtained raw material batch was melted until homogeneous, and then rapidly cooled to obtain a glass sample. The melting temperature was set to 1500°C to 2000°C for sample Nos. 1 to 33, and 1400°C to 1500°C for sample Nos. 34 and 35. The obtained glass sample was annealed near the glass transition temperature (450°C to 700°C), and then the refractive index (nd), the Abbe number (vd), and the degree of coloring (λ₅) were measured and the appearance (brilliance, fire, color tone) was evaluated according to the following methods.

The right-angle polishing was performed on the glass sample and the refractive index (nd) and the Abbe number (vd) were measured by using KPR-2000 (manufactured by Shimadzu Corporation). The refractive index (nd) was evaluated by a measured value with respect to the d line (587.6 nm) of the helium lamp. The Abbe number (vd) was calculated according to the equation Abbe number (vd) = {(nd-1)/(nF-nC)} using values of the refractive index of the d line and the refractive index of the F line (486.1 nm) and the C line (656.3 nm) of the hydrogen lamp.

For the degree of coloring (λ₅), the spectral transmittance was measured on a glass sample polished to a thickness of 10 ± 0.1 mm, and a wavelength showing a transmittance of 5% in the obtained transmittance curve was adopted. The spectral transmittance was measured using V-670 manufactured by JASCO Corporation.

The appearance was evaluated as follows. First, brilliant processing was performed such that the plane shape of each sample had a size of about 5 mm to 7 mm in diameter. Next, the processed glass sample was visually evaluated for brilliance and fire under a fluorescent light source. The evaluation was performed in the following four stages. In addition, color tone evaluation was performed visually. Plane photographs of the sample Nos. 8, 34 and 35 are shown in Fig. 1.

### [Brilliance]

A: the sample looks brilliant and has strong brilliance.
B: the sample looks brilliant.
C: the sample looks a little brilliant.
D: the sample has almost no brilliance (similar to a glass window).

### [Fire]

A: the sample shows iridescent (various colors) brilliance.
B: the sample shows iridescent brilliance, but the number of colors is small.
C: the sample has slight iridescent brilliance.
D: the sample has almost no iridescent brilliance.

As is clear from Tables 1 to 4, sample Nos. 1 to 33 which are Examples have a refractive index of 1.90 or more, an Abbe number of 41.4 or less, and have good brilliance and fire. On the other hand, sample Nos. 34 and 35 which are Comparative Examples are poor in brilliance and fire since the refractive index is as low as 1.56 or less and the Abbe number is as high as 45 or more.

## Claims

1. A decorative glass article, which is substantially free of lead oxide, and has a refractive index of 1.9 or more and an Abbe number of 42 or less.

2. The decorative glass article according to claim 1, which has a degree of coloring λ₅ of 395 or less.

3. The decorative glass article according to claim 1 or 2, wherein a content of bismuth oxide is 30% or less in mol%.

4. The decorative glass article according to any one of claims 1 to 3, comprising: in mol%, 0% to 63% of La₂O₃, 0% to 40% of B₂O₃, 0% to 50% of Al₂O₃, 0% to 40% of ZrO₂, 0% to 80% of Nb₂O₅, 0 to 60 of Gd₂O₃, 0% to 60% of Ta₂O₅, and 0.1% to 100% of La₂O₃+Nb₂O₅+Ta₂O₅+Gd₂O₃.

5. The decorative glass article according to claim 4, further comprising: in mol%, 0% to 85% of TiO₂.

6. The decorative glass article according to any one of claims 1 to 5, which is subjected to chamfering.

7. The decorative glass article according to any one of claims 1 to 6, which is an artificial jewel.

8. A decoration comprising:
the decorative glass article according to any one of claims 1 to 7.
